# EUROPEAN PATENT SPECIFICATION

(11) **EP 1 167 672 B1**
(45) Date of publication and mention of the grant of the patent: **02.07.2003**
(21) Application number: 00906384.3
(22) Date of filing: 01.03.2000
(51) Int. Cl.: E05D 15/10, E05F 15/04, E05F 15/06, B60J 5/06, B61D 19/00, B61D 19/02

(54) **OPEN-CLOSE DEVICE FOR EMBEDDABLE SLIDING DOORS**
ÖFFNUNGS- UND SCHLIESSVORRICHTUNG FÜR EINBAUBARE SCHIEBETÜREN
DISPOSITIF D'OUVERTURE ET DE FERMETURE POUR PORTES COULISSANTES ENCASTREES

(30) Priority: 08.03.1999 ES 9900469
(43) Date of publication of application: 02.01.2002
(73) Proprietor: Faiveley Espanola, S.A., 43080 Tarragona (ES)
(72) Inventor: CARRION ESPELTA, Juan, E-43080 Tarragona (ES)
(74) Representative: Carpintero Lopez, Francisco
(86) International application number: ES0000075
(87) International publication number: WO00053875

(56) References cited:
- EP-A- 0 461 104
- EP-A- 0 878 371
- DE-A- 4 230 888
- ES-T3- 2 119 226

## Description

### OBJECT OF THE INVENTION

The present invention relates to a new opening and closing device for locking sliding doors, such as those used in train cars and the like, doors which when closed lock into the car body, establishing an external surface continuity in them, in order to improve the aerodynamic penetration properties and which must be initially unlocked from said car body when opened, to then proceed with the required longitudinal motion.

The object of the invention, by means of a simple and effective structure, to make the aforementioned two movements fully perpendicular to each other, so that the locking and unlocking manoeuvre of the door on the car body takes place perpendicular to the main plane of the latter, which allows to obtain a tight seal with the aid of the appropriate joints, and without said joints being damaged in the opening and closing manoeuvres.

### BACKGROUND OF THE INVENTION

In closing mechanisms, such as those of the aforementioned examples, where two sliding doors are involved which must move in a synchronised manner, a commonly employed solution for reasons of functional and structural simplicity comprises a pneumatic cylinder which acts directly on one of the doors, while the second door receives the motion of the first one through a transmission belt in order to achieve a synchronised motion.

More specifically, the door which is driven directly by the pneumatic cylinder is provided with a rack which in its longitudinal displacement causes the rotation of a pinion, on whose axis is mounted the transmission belt which connects said pinion to a second one connected to the rack of the second door, so that by employing identical racks and pinions the motion of one door is transmitted to the other with perfect symmetry.

This solution, which is perfectly valid from a theoretical standpoint, implies in practice problems with the positional control of the doors as, for example, in the event that the transmission belt breaks the pneumatic cylinder would act solely on one of the doors, resulting in a partial closure, while the signal would indicate a "correct manoeuvre", as the pneumatic cylinder indeed has acted as it should, that is, the system would be generating at the control point, such as the train command cabin, a situation which would not reflect the true one.

In other occasions, and since the manoeuvre is usually controlled by the pressure in either chamber of the pneumatic cylinder, one of said chambers, such as that leading to the closing position, may be pressurised, as if the closing had taken place, but without a true closing situation due to one door being stuck, or to any agent external to the cylinder itself, so that the signal would again be incorrect.

An opening and closing device for locking sliding doors is described in the German patent DE-4.230.888, in which the doors may move within their own plane with the aid of telescoping guides. This device comprises a carriage to which the door is attached, and which may move along guides transverse to the door plane with the assistance of a pneumatic piston by means of a suitable transmission.

A similar device is disclosed in the European patent EP-0.878.371, which also comprises a carriage assembly moving along transverse guides and a motor for moving the doors laterally within their own plane.

### DESCRIPTION OF THE INVENTION

The present invention discloses a device according to claim 1. The device disclosed by the invention is based on the use of a support which may move transversally to the general plane of the door, for which it is mounted on guides perpendicular to said plane and is driven by a pneumatic piston, which by means of a suitable transmission, generates in said support two extreme positions, one of retraction and one of outwards projection, which correspond to the end positions of locking and unlocking of the door, to which end the latter is suitably related to the aforementioned support.

More specifically, the door is related to said support by a classical telescoping guide system which allows lateral motion of the door with respect to the support and the car itself, naturally when the support has been projected outwards by the pneumatic piston, with the longitudinal motion occurring with the aid of a linear motor also provided in said support and which by means of a suitable transmission carries the door itself in its motion in either direction.

It is also provided that said linear motor is provided at its output with a pulley wheel which may move within an L-shaped slot, so that the linear motor may not operate unless the pulley wheel has left the first segment of said L-shaped slot, which is achieved by displacing the support with the pneumatic piston, after which said pulley wheel may move along the longer segment of the L-shaped slot, corresponding to the door moving in the opening sense.

Thus, two mutually perpendicular motions are combined, one to unlock the door and one to displace it longitudinally, during the opening manoeuvre, with the complementary opposite motions in the closing manoeuvre, ensuring a perfect lock of the door on the car body, and therefore a closure which provides an optimum tight fit and protection of the gaskets employed for said fit.

### DESCRIPTION OF THE DRAWINGS

These and further characteristics of the invention will become clearer with the aid of the accompanying drawings of a preferred embodiment of the same, for purposes of illustration only and not in a limiting sense, where the following is shown:

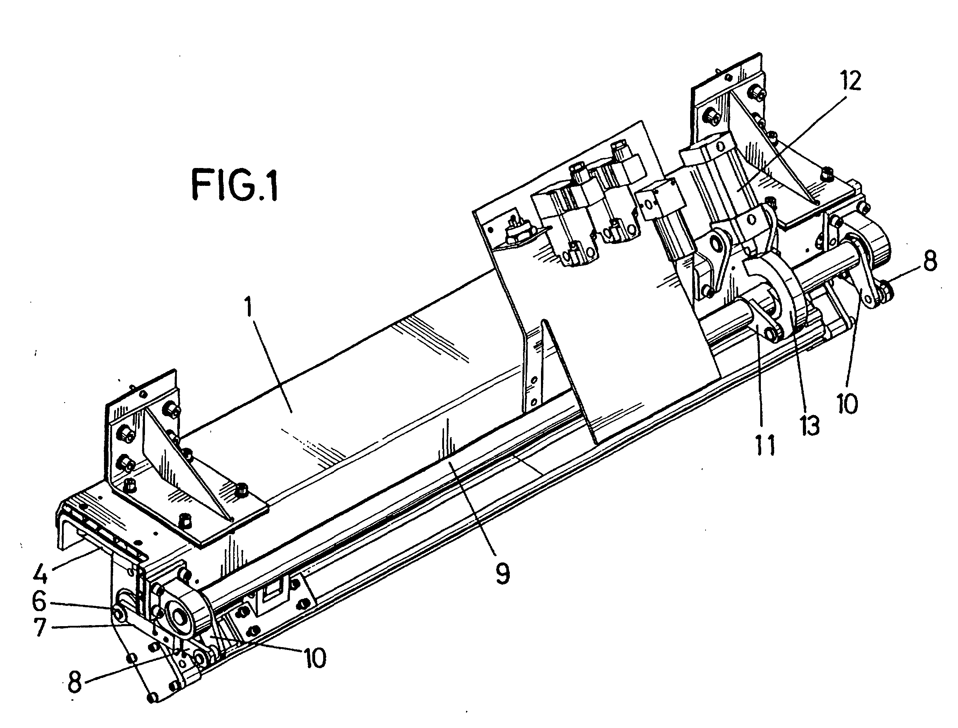

Figure 1.- Shows a perspective view of an opening and closing device for locking sliding doors in accordance with the object of the present invention.
Figure 2.-Shows a schematic view of a side elevation of that shown in the previous figure.
Figure 3.- Shows, finally, an enlarged view of the guide slot for the linear motor.

### PREFERRED EMBODIMENT OF THE INVENTION

In view of these figures it may be seen how the device disclosed by the invention comprises a frame (1), lengthened to match the door opening, provided with means (2) for attachment to the car body or element involved, frame (1) in which transverse bridges (3) are provided for securing guides (4), which are also transverse and on which slides a carriage or support (5), which at its ends (6) receives arms (7) longitudinally driven, with the aid of connecting rods (8), by a longitudinal bar (9) connected on its end to corresponding connecting rods (10), jointed to aforementioned rods (8), a bar (9) which relatively near to one of its ends and with the aid of a fork (11) receives a rotary motion from a pneumatic piston (12), suitably attached to frame (1) and whose rod acts on said fork (11) through the corresponding connecting rod (13).

Thus, pneumatic piston (12), with the described transmission, supplies to carriage or support (5) a transverse motion on guides (4) so that said carriage may occupy two end positions, one in which the door is locked in the train car or element involved and another in which the door is projected outwards in order to perform the opening and closing operations.

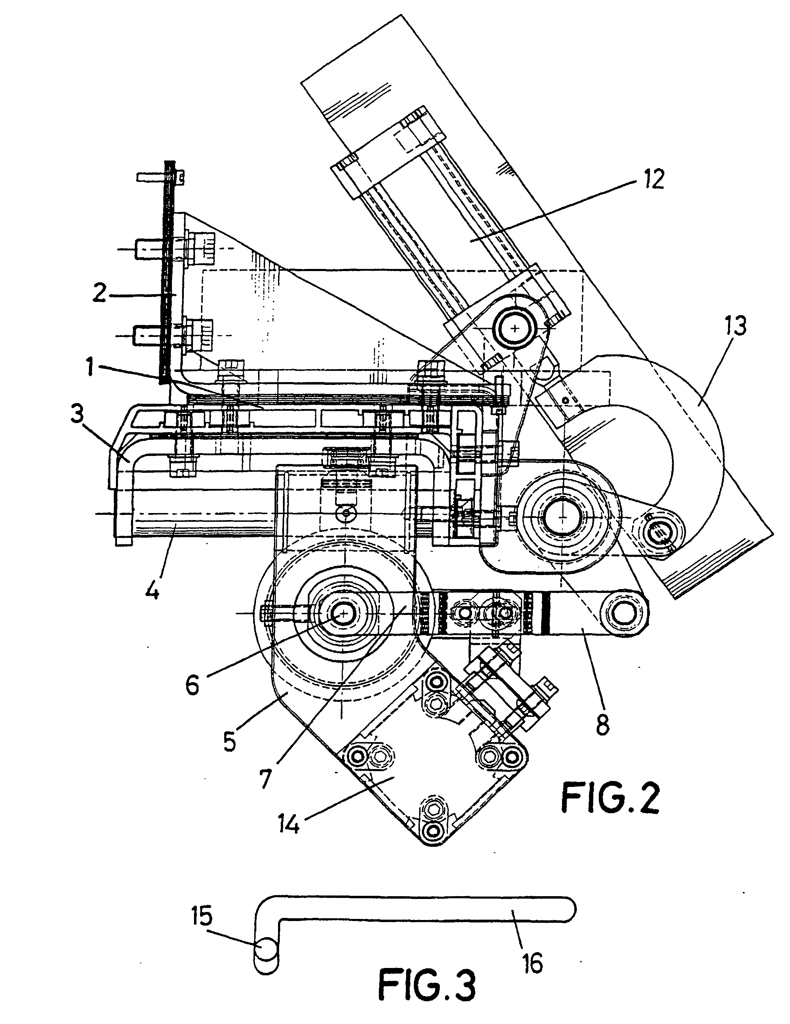

For such opening and closing operations, carriage (5) is attached to the door by a classical telescoping guide, not shown, which door is driven by a linear motor (14) established in the carriage or support (5) itself, with the shaft of motor (14) in the form of a spindle on which may move longitudinally a screw, suitably related to the door, in any case said element driven by motor (14) incorporating a pulley wheel (15) which moves within a slot (16), shown enlarged in figure 3 and established on a piece suitably attached to frame (1), so that in the fully closed door position pulley wheel (15) shall occupy the free end of the shorter segment of said L-shaped slot (16), that is, the position shown in figure 3, with said pulley wheel initially reaching the corner of slot (16), which can only be managed by the action of pneumatic piston (12) and the ensuing outwards displacement of carriage or support (5), and once said corner point is reached linear motor (14) can begin its function with its pulley wheel (15) running the entire length of the longer segment of slot (16), corresponding to the motion of the door to the end opening position, from which limiting position the manoeuvre is symmetrical and opposite in order to reach the closing position again, which final closed position is reached by a final motion in which the door moves perpendicular to the body of the train car or element involved, so that its fit on the latter may be perfect, using any suitable joint or gasket, without these being damaged by the relative motion between the door and the body.

## Claims

1. Opening and closing device for locking sliding doors, specifically for doors which may move within their own plane with the aid of a telescoping guide, which in turn may be given a motion perpendicular to the prior motion for its final locking in the corresponding opening to be closed, the device comprising a carriage or support (5), to which the door is attachable by means of the aforementioned telescoping guide, carriage (5) which may move along guides (4) transverse to the plane of the door with which the device is to be used, and mounted on a fixed frame (1), the device further comprising a pneumatic piston (12) which acts on said frame (1) for moving the carriage along said guides by means of a suitable transmission, and a linear motor (14) for moving the door parallel to its own plane and acting perpendicular to the aforementioned transversal guides (4), **characterised in that** the linear motor (14) is supported on said carriage (5), and its drive output is provided with a pulley wheel (15) which moves within an L-shaped slot (16), operatively provided in a piece attached to the frame (1), with said slot (16) having a first short segment which must be travelled by said pulley wheel (15) when the carriage (5) moves outwards from the plane of the door, and a second segment perpendicular to the first segment and considerably longer on which pulley wheel (15) runs when linear motor (14) is operated.

2. Opening and closing device for locking sliding doors, as claimed in claim 1, **characterised in that** the pneumatic piston (12) transmits its alternating motion through a connecting rod (13) and a fork (11) to a rotary bar (9) of a length corresponding to that of the carriage or support (5), said rotary bar (9) attached on its ends to corresponding connecting rods (10) which, aided by further connecting rods (8), provide an alternating motion to arms (7) coupled to the ends (6) of carriage or support (5).

## Patentansprüche

1. Öffnungs- und Schliessvorrichtung für zu verriegelnde Schiebetüren, insbesondere solche Türen, die sich in ihrer eigenen Ebene mit Hilfe von einer teleskopischen Führung bewegen können, die andererseits einen Antrieb erhalten kann, der senkrecht zu der vorhergehenden Bewegung verläuft, um so in der entsprechenden zu schliessenden Öffnung verriegelt werden zu können, wobei diese Vorrichtung eine Halterung oder einen Träger (5) umfasst, auf dem die Tür durch die vorgenannte teleskopische Führung befestigt ist. Der Träger (5) kann sich auf Führungen (4) bewegen, die quer zur Ebene der Tür verlaufen, für die die Vorrichtung angewendet wird und auf einem festen Rahmen (1) angebracht sein, wobei die Vorrichtung ausserdem über einen pneumatischen Kolben (12) verfügt, der auf besagtem Rahmen (1) mittels einer angemessenen Übertragung und einem Linearmotor (14) arbeitet, der die Tür parallel zu ihrer eigenen Ebene bewegt und senkrecht auf die vorgenannten Querführungen (4) einwirkt, **dadurch gekennzeichnet, dass** der Linearmotor (14) auf besagtem Träger (5) aufliegt und sein Antrieb über eine Seilscheibe (15) verfügt, die sich innerhalb einer L-förmigen Nut (16) bewegt, die werkmässig auf einem Element, das sich an dem Rahmen (1) befindet, vorgesehen ist, wobei besagte Nut (16) über einen ersten kurzen Abschnitt verfügt, der von der genannten Seilscheibe (15) überwunden werden muss, wenn der Träger (5) sich ausserhalb der Ebene der Tür bewegt und ein zweiter Abschnitt, der sich senkrecht zu dem ersten befindet und wesentlich länger ist, auf dem die Seilscheibe (15) entlangfährt, wenn der Linearmotor (14) in Betrieb genommen wird.

2. Öffnungs- und Schliessvorrichtung für zu verriegelnde Schiebetüren, gemäss Anspruch 1, **dadurch gekennzeichnet, dass** der pneumatische Kolben (12) seine Wechselbewegung über eine Verbindungsstange (13) und eine Gabel (11) auf einen Drehstab (9) überträgt, dessen Länge mit der der Halterung oder des Trägers (5) übereinstimmt, wobei der besagte Drehstab (9) an seinen Enden an entsprechenden Verbindungsstangen (10) befestigt ist, die mit Hilfe von weiteren Verbindungsstangen (8) eine Wechselbewegung auf Arme (7) überträgt, die an den Enden (6) der Halterung oder des Trägers (5) befestigt sind.

## Revendications

1. Dispositif d'ouverture et fermeture pour verrouiller les portes coulissantes, en particulier pour les portes pouvant se déplacer à l'intérieur de leur propre plan à l'aide d'un guide télescopique, qui à son tour peut recevoir un mouvement perpendiculaire au premier mouvement pour son verrouillage final dans l'ouverture correspondante à fermer, le dispositif comprenant un chariot ou support (5), auquel la porte peut être fixée au moyen du guide télescopique précité, chariot (5) pouvant se déplacer le long des guides (4) transversaux au plan de la porte avec laquelle le dispositif doit être utilisé, et établit sur l'encadrement fixe (1), le dispositif comprend également un piston pneumatique (12) agissant sur ledit encadrement (1) au moyen d'une transmission appropriée, et un moteur linéaire (14) pour déplacer la porte parallèlement à son propre plan et agir perpendiculairement aux guides transversaux précités(4), **caractérisé en ce que** le moteur linéaire (14) est supporté sur ledit chariot (5), et sa puissance d'entraînement est pourvue d'un réa entaillé (15) se déplaçant dans une rainure sous forme de L (16), pourvue opérationnellement dans une pièce fixée à l'encadrement (1), ladite rainure (16) ayant un premier segment court qui doit être parcouru par ledit réa entaillé (15) lorsque le chariot (5) se déplace hors du plan de la porte, et un deuxième segment perpendiculaire au premier segment, et considérablement plus long sur lequel le réa entaillé (15) circule lorsque le moteur linéaire (14) est mis en marche.

2. Dispositif d'ouverture et fermeture pour verrouiller les portes coulissantes, selon la revendication 1, **caractérisé en ce que** le piston pneumatique (12) transmet son mouvement alternatif à travers une bielle (13) et une fourchette (11) à une barre pivotante (9) d'une longueur correspondant à celle du chariot ou support (5), ladite barre pivotante (9)étant fixée par ses extrémités aux bielles correspondantes (10) qui, à l'aide de bielles additionnelles (8), fournissent un mouvement alternatif aux bras (7) accouplés aux extrémités (6) du chariot ou support (5).
